(19) Europäisches Patentamt
European Patent Office
Office européen des brevets

(11) **EP 3 820 714 B1**

(12) **EUROPÄISCHE PATENTSCHRIFT**

(45) Veröffentlichungstag und Bekanntmachung des Hinweises auf die Patenterteilung:
**19.07.2023   Patentblatt 2023/29**

(21) Anmeldenummer: **19742126.6**

(22) Anmeldetag: **09.07.2019**

(51) Internationale Patentklassifikation (IPC):
**B42D 25/324** (2014.01)    **B42D 25/373** (2014.01)
**B42D 25/351** (2014.01)    **B42D 25/29** (2014.01)
**B42D 25/425** (2014.01)    **B42D 25/445** (2014.01)
**G02B 30/00** (2020.01)

(52) Gemeinsame Patentklassifikation (CPC):
**B42D 25/324; B42D 25/29; B42D 25/351; B42D 25/373; B42D 25/425; B42D 25/445; G02B 5/1828; G02B 5/1842; G02B 5/22; G02B 27/4272; G02B 30/00**

(86) Internationale Anmeldenummer:
**PCT/EP2019/000209**

(87) Internationale Veröffentlichungsnummer:
**WO 2020/011391 (16.01.2020 Gazette 2020/03)**

(54) **OPTISCH VARIABLES SICHERHEITSELEMENT MIT REFLEKTIVEM FLÄCHENBEREICH**

OPTICALLY VARIABLE SECURITY ELEMENT HAVING REFLECTIVE SURFACE REGION

ÉLÉMENT DE SÉCURITÉ OPTIQUEMENT VARIABLE À ZONE DE SURFACE RÉFLÉCHISSANTE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **09.07.2018   DE 102018005474**

(43) Veröffentlichungstag der Anmeldung:
**19.05.2021   Patentblatt 2021/20**

(73) Patentinhaber: **Giesecke+Devrient Currency Technology GmbH**
**81677 München (DE)**

(72) Erfinder:
• **SCHERER, Kai Herrmann**
**81539 München (DE)**
• **SCHERER, Maik Rudolf Johann**
**82491 Grainau (DE)**

• **DEHMEL, Raphael**
**83115 Neubeuern (DE)**
• **RAHM, Michael**
**83646 Bad Tölz (DE)**
• **DORFF, Giselher**
**83607 Holzkirchen (DE)**
• **RAUCH, Andreas**
**82441 Ohlstadt (DE)**
• **FUHSE, Christian**
**83624 Otterfing (DE)**
• **SATTLER, Tobias**
**83607 Holzkirchen (DE)**

(74) Vertreter: **Giesecke + Devrient IP**
**Prinzregentenstraße 161**
**81677 München (DE)**

(56) Entgegenhaltungen:
EP-A1- 3 216 620            WO-A1-2007/079851
WO-A1-2012/000669       US-A1- 2008 231 976

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 3 820 714 B1

**Beschreibung**

Die Erfindung betrifft ein optisch variables Sicherheitselement zur Absicherung von Wertgegenständen mit einem flächigen Träger und einem auf dem Träger angeordneten reflektiven Flächenbereich. Die Erfindung betritt auch ein Verfahren zum Herstellen eines solchen Sicherheitselements sowie einen mit einem solchen Sicherheitselement ausgestatteten Datenträger.

Datenträger, wie Wert- oder Ausweisdokumente, aber auch andere Wertgegenstände, wie etwa Markenartikel, werden zur Absicherung oft mit Sicherheitselementen versehen, die eine Überprüfung der Echtheit der Datenträger gestatten und die zugleich als Schutz vor unerlaubter Reproduktion dienen. Die Sicherheitselemente können beispielsweise in Form eines in eine Banknote eingebetteten Sicherheitsfadens, einer Abdeckfolie für eine Banknote mit Loch, eines aufgebrachten Sicherheitsstreifens, eines selbsttragenden Transferelements oder auch in Form eines direkt auf ein Wertdokument aufgedruckten Merkmalsbereichs ausgebildet sein.

Eine besondere Rolle bei der Echtheitsabsicherung spielen Sicherheitselemente mit betrachtungswinkelabhängigem oder dreidimensionalem Erscheinungsbild, da diese selbst mit modernsten Kopiergeräten nicht reproduziert werden können. Dazu sind die Sicherheitselemente mit optisch variablen Elementen ausgestattet, die dem Betrachter unter unterschiedlichen Betrachtungswinkeln einen unterschiedlichen Bildeindruck vermitteln und beispielsweise je nach Betrachtungswinkel einen anderen Farb- oder Helligkeitseindruck und/ oder ein anderes graphisches Motiv zeigen. Im Stand der Technik sind dabei als optisch variable Effekte beispielsweise Bewegungseffekte, Pumpeffekte, Tiefeneffekte oder Flipeffekte beschrieben, die mit Hilfe von Hologrammen, Mikrolinsen oder Mikrospiegeln realisiert werden.

WO 2012/ 000669 A1 zeigt eine Kombination aus Mikrolinsen und Mikrospiegeln, US 2008/231976 A1 verwendet Mikroprismen und WO 2007/079851 A1 verwendet Mikrospiegel. EP 3 216 620 A1 zeigt den Oberbegriff von Anspruch 1.

Ausgehend davon liegt der Erfindung die Aufgabe zugrunde, die Fälschungssicherheit und die visuelle Attraktivität gattungsgemäßer optisch variabler Sicherheitselemente weiter zu erhöhen und insbesondere optisch variable Sicherheitselemente mit zwei oder mehr unterschiedlichen Erscheinungsbildern bzw. Effekten in unterschiedlichen Farben und in perfektem Passer bereitzustellen.

Diese Aufgabe wird durch die Merkmale der unabhängigen Ansprüche gelöst. Weiterbildungen der Erfindung sind Gegenstand der abhängigen Ansprüche.

Die Erfindung enthält zur Lösung der genannten Aufgabe ein in Anspruch 1 definiertes optisch variables Sicherheitselement, insbesondere zur Absicherung von Wertgegenständen, mit einem mehrfarbigen reflektiven Flächenbereich, wobei die Fläche des Sicherheitselements bzw. des reflektiven Flächenbereiches eine darauf senkrecht stehende z-Achse definiert. Der reflektive Flächenbereich enthält eine erste, höher liegende Reliefstruktur und eine zweite, tiefer liegende Reliefstruktur enthält, die in z-Richtung in unterschiedlichen Höhenstufen angeordnet sind.

Die erste Reliefstruktur ist mit einer ersten Farbbeschichtung und die zweite Reliefstruktur mit einer zweiten, unterschiedlichen Farbbeschichtung versehen. Die beiden Reliefstrukturen überlappen in einem Überlappungsbereich.

Die erste Farbbeschichtung der höher liegenden ersten Reliefstruktur weist im Überlappungsbereich zumindest eine Aussparung auf, deren Abmessung mehr als 140 $\mu$m beträgt. Die erste Farbbeschichtung umfasst entsprechend einen Randbereich, der an die Aussparung angrenzt.

Als zweifarbiges Passermerkmal lässt die erste Reliefstruktur den Randbereich der erste Farbbeschichtung mit einem ersten Farbeindruck und die zweite Reliefstruktur die zweite Farbbeschichtung durch die Aussparung hindurch mit einem zweiten, unterschiedlichen Farbeindruck zueinander gepasst in Erscheinung treten.

Die Abmessungen der Aussparung im Überlappungsbereich betragen vorteilhaft mehr als 140 $\mu$m, insbesondere mehr als 250 $\mu$m oder sogar mehr als 500 $\mu$m oder 1 mm. Die Aussparung erstreckt sich insofern über eine Vielzahl von Teileelementen der Reliefstruktur. Die genannten Abmessungen können von den Aussparungen nur in einer lateralen Richtung überschritten werden, vorteilhaft sind die Aussparungen aber in jeder lateralen Richtung größer als die genannten Abmessungen. Besonders vorteilhaft liegen die Abmessungen über der Auflösungsgrenze des bloßen Auges, so dass ihr Flächenbereich ohne Hilfsmittel erkannt werden kann.

Der Randbereich der ersten Farbbeschichtung grenzt zumindest zweiseitig an die Aussparung an. Bevorzugt umschließ der Randbereich die Aussparung.

Die Reliefstrukturen sind bevorzugt Prägestrukturen. Insbesondere eine Prägung in eine härtbare Schicht, wie nur beispielsweise UV-Lacke, ist weiter bevorzugt. Alternative Erstellungsverfahren, wie beispielsweise subtraktives Lasern oder additives Aufbauen, beispielsweise mittels 3D-Druck, sind denkbar aber weniger kostengünstig.

In einer vorteilhaften Erfindungsvariante enthält der reflektive Flächenbereich genau zwei Reliefstrukturen, die jeweils auf einer bestimmten Höhenstufe angeordnet sind.

Es ist allerdings gemäß einer ebenfalls vorteilhaften Abwandlung auch möglich, zumindest einen Teil der Reliefelemente einer Reliefstruktur (Prägeelemente einer Prägestruktur) in unterschiedlichen Höhen anzuordnen um dadurch die wirksame Reflektorfläche der Reliefstruktur weiter zu optimieren. Wird beispielsweise bei einer Anordnung auf zwei bestimmen Höhenstufen ein Reflektor der tiefer liegenden Reliefstruktur aus einer relevanten Wirkungsrichtung von einem Reflektor der höher liegenden Reliefstruktur teilweise verdeckt, so kann zur Abhilfe der Reflektor der tiefer liegenden Reliefstruktur nach oben und/ oder der Reflektor der höher liegenden Reliefstruktur nach unten versetzt werden. Dabei werden die Reflektoren vorzugsweise an der gleichen lateralen Position der x-y-Ebene ohne Änderung ihres Reliefprofils in z-Richtung nach oben bzw. unten versetzt, um die Verdeckung zu reduzieren. Die Versetzung beträgt vorteilhaft weniger als 80%, insbesondere weniger als 60% des Abstands der beteiligten Höhenstufen. Alternativ oder zusätzlich können die Reflektoren auch in ihrer lateralen Position versetzt sein, um die Verdeckung zu reduzieren.

Bevorzugt bildet die erste bzw. zweite Reliefstruktur des mehrfarbig reflektiven Flächenbereichs zusammen mit ihrer Farbbeschichtung eine erste bzw. zweite einfarbig reflektive Reliefstruktur. Für einen Betrachter tritt das zweifarbige Passermerkmal zumindest in einem Betrachtungswinkel, der von der z-Richtung verschieden ist, in Erscheinung. Die Farbbeschichtungen treten vorliegend betrachtungswinkelabhängig farbig, reflektiv in Erscheinung. Bei dem Betrachtungswinkel wird das Licht von der Reliefstruktur zum Betrachter reflektiert und tritt somit im vorliegenden Sinne in Erscheinung, wobei die Farbbeschichtung den Farbeindruck bestimmt. Da auch das eintreffende Licht eine Vorzugsrichtung - insbesondere im Wesentlichen senkrecht - hat, entsteht für den Betrachter bekanntermaßen ein deutlich wahrnehmbarer farbiger Lichtreflex.

Vorzugsweise treten für einen Betrachter in einem Betrachtungswinkelbereich, welcher den ersten Betrachtungswinkel umfasst, oder in einem zweiten Betrachtungswinkel die Farbbeschichtungen zueinander gepassert in Erscheinung.

Alternativ oder zusätzlich treten für einen Betrachter in einem zweiten Betrachtungswinkelbereich oder in einem dritten Betrachtungswinkel zumindest eine der beiden Reliefstrukturen nicht farblich in Erscheinung.

In weiteren Ausgestaltungen kann die zweite Farbbeschichtung in einem durch die Aussparung und einen Betrachtungswinkel definierten Betrachtungsbereich entweder vollflächig oder teilweise, nämlich nur angrenzend an den Randbereich, in Erscheinung treten.

Das zweifarbige Passermerkmal kann ein eigenständiges, optisch variables Merkmal bilden. Beide Reliefstrukturen sind eingerichtet das eigenständige, optisch variable Merkmal gemeinsam zu erzeugen. Beispielsweise kann das zweifarbige Passermerkmal sich entlang des Aussparungsrandes bewegen. Das eigenständige, optisch variable Merkmal kann beispielsweise betrachtungswinkelabhängig sein: statisch, insbesondere statisch dreidimensional und/ oder statisch schwebend, oder dynamisch, insbesondere bewegt dreidimensional und/ oder bewegt schwebend. Ein optisch variables Merkmal in einem Innenbereich der Aussparung kann statisch, dreidimensional und/ oder anders bewegt sein. Ebenso kann das zweifarbige Passermerkmal in ein optisch variables Merkmal des reflektiven Flächenbereiches integriert sein. Ein statisches, dreidimensionales und/ oder bewegtes Merkmal in der Aussparung bildet mit dem Randbereich das zweifarbige Passermerkmal. Alternativ kann das zweifarbige Passermerkmal durch die beiden Reliefstrukturen zwei aufeinander abgestimmte, unterschiedliche optisch variable Teilmerkmale umfassen. Die zwei optisch variablen Teilmerkmale können insbesondere ausgewählt sein aus optisch variablen Merkmalen, die sich vorzugsweise unterscheiden hinsichtlich einer oder mehrerer der Eigenschaftsgruppen: statisch/ dynamisch, flach/ dreidimensional und/ oder in Substratebene liegend/ schwebend über oder unter Substratebene. Die exakte Passerung der zwei Farbeindrücke und der optischen Variabilität (bzw. des Effekts) kann somit besonders hervorgehoben werden.

Der reflektive Flächenbereich umfasst in der Regel mehr als die eine Aussparung, vorzugsweise zwei, drei oder mehr als drei Aussparungen. Das zweifarbige Passermerkmal ist entsprechend in jeder dieser Aussparungen vorhanden. Die Aussparungen sind aufeinander abgestimmt, um ein optisch variables Merkmal des reflektiven Flächenbereiches zu bilden. Beispielsweise weisen die Aussparungen die gleiche Form auf und/ oder treten bei unterschiedlichen Betrachtungswinkeln, insbesondere eines Betrachtungswinkelbereichs, mit dem zweiten Farbeindruck in Erscheinung.

In weiteren Teilen des Überlappungsbereichs oder außerhalb des Überlappungsbereiches können andere Farbbeschichtungen insbesondere mit einem dritten und/ oder einem vierten Farbeindruck verwendet werden. So können in weiteren Aussparungen anders zweifarbige Passermerkmale, insbesondere mit einem dritten (zusammen mit dem ersten oder zweiten) Farbeindruck oder mit einem dritten und vierten Farbeindruck, vorhanden sein. Ebenso kann eine der (ersten, zweiten, dritten oder vierten) Farbbeschichtungen außerhalb des Passermerkmals oder außerhalb des Überlappungsbereiches einen anderen Buntfarbton aufweisen.

Die Reliefstrukturen sind vorzugsweise Mikrospiegelanordnungen, insbesondere Mikrospiegelanordnungen mit gerichteten Mikrospiegeln. Die Mikrospiegelanordnung(en) ist (sind) achromatische Mikrospiegelanordnung(en), die insbesondere nicht-diffraktiv ist (sind). Die gerichteten Spiegel der Mikrospiegelanordnung zeichnen sich durch eine bevorzugte Reflexionsrichtung aus, die beispielsweise mittels Neigungswinkel und/ oder Azimutwinkel einstellbar ist. Anordnungen aus kleinen, strahlenoptisch wirkenden reflektiven Facetten, die einfallendes Licht wie kleine Spiegel in eine durch die Bedingung "Einfallswinkel gleich Ausfallswinkel" gegebene Reflexionsrichtung lenken, werden als Mikrospiegelanordnungen bezeichnet. Die einzelnen gerichteten Mikrospiegel der Mikrospiegelanordnung reflektieren abhängig von Ihrer Ausrichtung für den Betrachtungswinkel entweder das Licht zum Betrachter oder nicht (hell oder dunkel). Erst durch die Farbbeschichtung tritt der Mikrospiegel dann farbig reflektierend in Erscheinung bzw.

nicht (farbig hell bzw. dunkel). Da die Mikrospiegelanordnungen Prägestrukturen darstellen, werden sie in dieser Beschreibung teils auch als Mikrospiegelprägungen bezeichnet. Als gerichtete Mikrospiegel eignen sich besonders gut plane Mikrospiegel. Alternativ sind gerichtete Hohlspiegel und/ oder gerichtete fresnelartige Spiegel verwendbar.

Bei Mikrospiegelanordnungen sind die Mikrospiegel mit Vorteil mit einer Kantenlänge zwischen 4 μm und 100 μm, vorzugsweise zwischen 5 μm und 30 μm gebildet. Die Mikrospiegel weisen vorzugsweise eine (maximale) Ganghöhe von weniger als 20 μm, insbesondere weniger als 10 μm auf, weiter bevorzugt weniger als 5 μm. Bevorzugt sind die Mikrospiegel in einer oder beiden in Mikrospiegelanordnungen in einem periodischen Raster mit einer Periodenlänge zwischen 4 μm und 100 μm, vorzugsweise zwischen 5 μm und 30 μm angeordnet.

Nur parallel oder senkrecht zum mehrfarbig reflektiven Flächenbereich ausgerichtete Flächen sind keine gerichteten Mikrospiegel im vorliegenden Sinne. Die gerichteten Mikrospiegel können regelmäßig oder unregelmäßig ausgebildet (z.b. gleiche Form oder variierende Form) und/ oder angeordnet sein (z.b. in einem Muster oder quasizufällig verteilt) sein.

Die beiden Reliefstrukturen des reflektiven Flächenbereichs sind vorteilhaft jeweils durch eine maximale Ganghöhe charakterisiert, wobei der Abstand benachbarter Höhenstufen in z-Richtung größer als die maximale Ganghöhe des jeweils tiefer liegenden Reliefstrukturbereichs ist. Vorzugsweise ist der Abstand größer als 150%, besonders bevorzugt 200%, der maximalen Ganghöhe. Weiter bevorzugt liegt der Abstand benachbarter Höhenstufen in z-Richtung zwischen 150% und 750%, besonders bevorzugt zwischen 200% und 500%, weiter bevorzugt zwischen 200% und 400% der maximalen Ganghöhe des tiefer liegenden Reliefstrukturbereichs.

Sind die Reliefstrukturen beispielsweise durch Mikrospiegelanordnungen gebildet, so hängt die Ganghöhe der Mikrospiegel von ihren lateralen Abmessungen und ihren Neigungswinkeln ab. Selbst bei gleichen lateralen Abmessungen sind die Neigungswinkel der Mikrospiegel typischerweise verschieden, so dass die Mikrospiegel unterschiedliche Ganghöhe aufweisen. Charakteristisch für die Mikrospiegelanordnung ist allerdings die maximale Ganghöhe ihrer Mikrospiegel. Die oben genannten maximalen Ganghögen ("Ganghöhe weniger als") sind bevorzugt. Weisen die Mikrospiegel beispielsweise eine Kantenlänge von 10 μm und einen maximalen Neigungswinkel von 30° auf, so ist die maximale Ganghöhe der Mikrospiegelanordnung durch

$$G_{max} = 10\ \mu m * \tan(30°) = 5{,}8\ \mu m.$$

gegeben, wobei die einzelnen Mikrospiegel je nach Neigungswinkel eine Ganghöhe zwischen 0 und $G_{max}$ haben

können. Der Abstand der Mikrospiegelanordnung zur darüber liegenden Mikrospiegelanordnung ist dann vorteilhaft größer als 5,8 μm und liegt insbesondere zwischen 8,7 μm (150% von $G_{max}$) und 23,2 μm (400% von $G_{max}$). In der Regel weisen die Mikrospiegel eine einheitliche Größe, insbesondere Kantenlänge, auf. In anderen bevorzugten Ausgestaltungen weisen die Mikrospiegel der Mikrospiegelanordnung eine maximale Ganghöhe jedoch unterschiedliche Kantenlängen auf. Wenn für Mikrospiegel mit höherem Winkel eine kleinere Kantenlänge gewählt wird, kann eine kleinere maximale Ganghöhe eingehalten werden. Vorzugsweise sind Mikrospiegel mit einem Neigungswinkel unter einem Grenzwinkel mit einer einheitlichen Größe (bzw. Kantenlänge) und Mikrospiegel mit einem Neigungswinkel über dem Grenzwinkel mit verringerter Größe (bzw. Kantenlänge) vorgesehen. Im oben berechneten Beispiel mit $G_{max}$= 5,8 μm in einer Mikrospiegelanordnung können auf diesem Weg Mikrospiegel bis zu einer maximalen Neigung von etwa 49 Grad vorliegen, wenn deren Kantenlänge nur 5μm statt 10 μm beträgt.

Auch wenn das Vorgehen anhand von Mikrospiegelanordnungen erläutert wurde, kann analog auch für andere geprägte Reliefstrukturen eine maximale Ganghöhe der Prägestrukturbereiche bestimmt werden.

Die Farbbeschichtungen der Reliefstrukturbereiche sind in vorteilhaften Gestaltungen durch lasierende Farben gebildet. Auch Metallisierungen, beispielsweise aus Aluminium, Silber oder einer Legierung, etwa aus Kupfer und Aluminium, kommen in Frage, ebenso Dünnschichtaufbauten, insbesondere farbkippende Dünnschichtaufbauten, farbstabile farbfilternde Dünnschichtaufbauten (unterschiedliche Farbe in Remission und Transmission) oder Silizium-Aluminium-Dünnschichten. Die Farbbeschichtungen können auch durch lasierende Farben mit einer hinterlegten metallischen Verspiegelung, beispielsweise aus Aluminium, gebildet sein. Die Farbbeschichtungen können dabei ein lasierendes Bild aus mehreren lasierenden Farben darstellen, das mit einer Verspiegelung, beispielsweise aus Aluminium, hinterlegt ist. Auch Lumineszenzfarben, insbesondere Fluoreszenzfarben mit einer metallischen Verspiegelung kommen als Farbbeschichtungen in Betracht. Die Farbbeschichtungen können auch durch Strukturfarben gebildet sein. Schließlich kommen auch Nanopartikelfarben als Farbbeschichtungen in Betracht, wie etwa Gold-Blau-Partikel, verschiedene Effektpigmente, farbkippende Pigmente oder Supersilber.

Eine Farbbeschichtung folgt vorzugsweise dem Reliefverlauf seiner Reliefstruktur. Eine Oberfläche (oder beide Oberflächen) der Farbbeschichtung folgt der Reliefstruktur. Die zweite Oberfläche der Farbbeschichtung(en) folgt bevorzugt ebenfalls der Reliefstruktur. Alternativ kann die zweite Oberfläche eben ausgebildet sein. In einer weiteren - schwieriger herstellbaren - Alternative umfasst die zweite Oberfläche der Farbbeschichtung eine farbgebende Buntstruktur, wie beispielsweise eine Subwellenlängen-, Nano- oder Binärstruktur.

Die Farbbeschichtungen sind vorzugsweise direkt auf die Reliefstrukturen, insbesondere die Mikrospiegelanordnungen aufgebracht. Verschiedenartige Farbbeschichtungen können auch bereichsweise nebeneinander oder übereinander vorliegen. Bei mehrschichtig ausgebildeten Farbbeschichtungen, beispielsweise einer lasierenden Farbe mit Hintergrundmetallisierung, ist es allerdings auch möglich, dass nur ein Teil der mehreren Schichten, beispielsweise die Hintergrundmetallisierung, direkt auf die Reliefstrukturen aufgebracht ist. Der restliche Teil der Schichten, beispielsweise die lasierende Farbe, kann dann über den Reliefstrukturen, beispielsweise zwischen dem beschichteten Reliefstrukturbereich und dem benachbarten, höher liegenden Reliefstrukturbereich angeordnet sein. Die zweite Oberfläche einer reflektierenden Teilschicht der Farbbeschichtung(en) folgt bevorzugt ebenfalls der Reliefstruktur. Die zweite Oberfläche einer lasierenden Farbteilschicht der Farbbeschichtung(en) kann ebenfalls der Reliefstruktur folgen, eben ausgebildet sein oder der anderen Reliefstruktur folgen. Der restliche Teil der Schichten kann auch mit weiteren Schichten kombiniert sein. Beispielsweise kann der Prägelack für den benachbarten, höher liegenden Reliefstrukturbereich eingefärbt sein und so eine durchgehende Farb-Teilbeschichtung für den tiefer liegenden Reliefstrukturbereich darstellen. Bevorzugt folgt die untere Oberfläche des (ersten) gefärbten Prägelacks der unteren Reliefstruktur und die obere Oberfläche des gefärbten Prägelacks bildet die obere (erste) Reliefstruktur.

Die Farbeindrücke der ersten und zweiten Farbbeschichtungen sind unterschiedlich, sie unterscheiden sich in ihrem Farbton. Bevorzugt erzeugen beide Farbbeschichtungen einen Buntfarbton. Alternativ kann eine der beiden Farbbeschichtungen für den Betrachter einen Unbuntfarbton, vorzugsweise silbrig, und die andere ein Buntfarbton erzeugen.

Neben der Farbbeschichtung des höher liegenden Reliefstrukturbereichs kann auch die Farbbeschichtung des tiefer liegenden Reliefstrukturbereichs nur bereichsweise vorliegen. Bereichsweise vorliegende Farbbeschichtungen können entweder bereichsweise aufgebracht und/ oder nach vollflächigem Aufbringen selektiv wieder entfernt sein. Nachfolgend werden einige vorteilhafte Verfahren beschrieben, mit denen die oben genannten Farbbeschichtungen nur bereichsweise vorgesehen werden können. Dem Fachmann ist bekannt, dass nicht jedes Verfahren für alle Arten von Farbbeschichtungen geeignet ist. Insbesondere wenn in einem Sicherheitselement mehrere unterschiedliche Farbbeschichtungen eingesetzt werden, können auch bei der Strukturierung mehrere unterschiedliche Verfahren angewandt werden.

Strukturierte Farbbeschichtungen mit metallischen Farben, Dünnschicht-Farben, Strukturfarben oder Nanopartikeln können beispielsweise durch Einsatz einer Waschfarbe erzeugt werden. Hierzu wird im Insetterdruck Waschfarbe zur jeweiligen Reliefstruktur gedruckt, anschließend vollflächig metallisiert und danach gewaschen. Um eine möglicherweise vorhandene Toleranz beim Drucken der Waschfarbe zu vermeiden, kann die Reliefstruktur weiter angepasst werden. Die Reliefstruktur kann bereichsweise eine haftungsvermindernde (und/ oder eine haftungserhöhende) Feinstruktur umfassen, die insbesondere hydprophob (bzw. hydrophil) wirkt. Die haftungsvermindernde Feinstruktur in einem Bereich verhindert somit insbesondere das Anhaften der Waschfarbe in dem Bereich. Ein erster Bereich mit haftungsvermindernder Feinstruktur kann optional an einen zweiten Bereich mit haftungserhöhender Feinstruktur angrenzen. Die Verwendung eines gegebenenfalls eingefärbten Ätzresists ist insbesondere in Kombination mit lasierenden Farben vorteilhaft. Hierzu kann die Reliefstruktur zuerst vollständig beschichtet werden, anschließend wird der Ätzresist gedruckt, wobei gewünschte Bereiche unbedruckt bleiben und schließlich wird die Beschichtung geätzt. Durch Laserbeaufschlagung lassen sich vor allem metallische Farben, metallische Verspiegelungen, sowie lasersensitive, lasierende Farben bereichsweise mit hoher Auflösung entfernen. In der Reliefstruktur kann bereichsweise eine Licht absorbierende Feinstruktur, wie beispielsweise Mottenaugenstrukturen oder quasizufälliger Strukturen, vorgesehen werden. Die Absorption von Licht wird dadurch erhöht, so dass keine Laser mehr verwendet werden müssen. Es können zum Entfernen somit auch normale Lichtquellen, wie UV-Lampen oder LEDs, verwendet werden. Metallische Flakes, Nanopartikelfarbe oder Supersilber (in der Regel nanoskalige Alupartikel) können direkt im Register gedruckt werden. Anstelle des oben genannten Ätzresists kann auch ein optional eingefärbter Fotoresist zunächst vollflächig aufgebracht und im Anschluss bereichsweise belichtet werden. Je nach verwendetem Resist lösen sich dann die belichteten oder unbelichteten Bereiche im Ätzbad, sodass das darunterliegende Metall sich löst, während die vom Fotoreist überzogenen metallischen Bereiche vor der Ätze geschützt bleiben.

Farbbeschichtungen können auch durch ein Metalltransferverfahren erzeugt werden. Dabei werden Bereiche, die demetallisiert werden sollen, mit Hilfe eines Prägewerkzeuges hochgeprägt. Im Anschluss wird die so vorbehandelte Folie vollständig metallisiert und das Metall auf den hochgeprägten Stellen selektiv mit einer anderen Folie wieder abgezogen, sodass nur Metall in den Vertiefungen verbleibt. Auch ein Farbübertrag kann auf ähnliche Weise erzeugt werden. Bereiche, die später farbig erscheinen sollen, werden dabei gegenüber den restlichen Bereichen hochgeprägt. Ein Farbmittel, beispielsweise Flakes, Nanopartikelfarbe, Supersilber oder eine lasierende Farbe wird auf eine Walze aufgebracht und selektiv auf die hochgeprägten Bereiche der Folie übertragen. Umgekehrt wird bei einem Farbfüllungsverfahren eine gewünschte Farbbeschichtungen dadurch erzeugt, dass Bereiche, die später farbig erscheinen sollen, gegenüber den restlichen Bereichen tiefgeprägt werden. Ein Farbmittel, beispielsweise Flakes, Nanopartikelfarbe, Supersilber oder eine lasierende Farbe wird vollflächig aufgedruckt und anschließend mit einem hartangestellten Kammerrakel abgezogen oder mit einem Tuch abgewischt, so dass Farbe nur in den Vertiefungen zurückbleibt.

Das beschriebene Sicherheitselement kann zusätzlich mit farblosen oder farbigen Negativkennzeichen ausgestattet sein. Hierzu kann insbesondere vorgesehen sein, dass der Überlappungsbereich zusätzlich Teilbereiche mit einer Negativkennzeichnung enthält, in denen die Farbbeschichtung des höher liegenden Reliefstrukturbereichs und zumindest teilweise auch die Farbbeschichtung des tiefer liegenden Reliefstrukturbereichs ausgespart ist.

Dabei kann die Farbbeschichtung des tiefer liegenden Reliefstrukturbereichs in den Negativkennzeichnungs-Teilbereichen vollständig ausgespart sein, so dass das Negativkennzeichen keinen der Farbeindrücke der beiden Farbbeschichtungen erzeugt. Das Negativkennzeichen erscheint insbesondere farblos und ist vor allem im Durchlicht gut zu erkennen.

In einer anderen Gestaltung ist die Farbbeschichtung des tiefer liegenden Reliefstrukturbereichs mehrschichtig ausgebildet, wobei in den Negativkennzeichnungs-Teilbereichen zumindest eine der mehreren Schichten ausgespart ist, so dass ein faribiges Negativkennzeichen entsteht. Mit Vorteil enthält die Farbbeschichtung des tiefer liegenden Reliefstrukturbereichs eine opake Teilschicht, insbesondere eine Metallisierung, und eine transluzente Farbschicht, wobei in den Negativkennzeichnungs-Teilbereichen die opake Teilschicht, nicht aber die transluzente Farbschicht ausgespart ist, so dass ein Negativkennzeichen mit der Farbwirkung der transluzenten Farbschicht entsteht.

Die Linienstärken der übereinanderliegenden Aussparungen eines Negativkennzeichens liegen vorteilhaft oberhalb von 100 μm, bevorzugt oberhalb von 150 μm, besonders bevorzugt oberhalb von 300 μm, um eine gute Erkennbarkeit der Negativkennzeichen zu gewährleisten.

Bei einem Negativkennzeichen sind die Aussparungen in der Farbbeschichtung des tiefer liegenden Reliefstrukturbereichs mit Vorteil mit einer etwas größeren Fläche ausgebildet als die Aussparungen in der Farbbeschichtung des höher liegenden Reliefstrukturbereichs, um Registerschwankungen zwischen den beiden Reliefstrukturbereichen auszugleichen.

Die Reliefstrukturbereiche sind in einer vorteilhaften Ausgestaltung auf gegenüberliegenden Seiten einer transparenten Trägerfolie angeordnet. Alternativ sind Reliefstrukturbereiche übereinander auf derselben Seite einer, vorzugsweise transparenten, Trägerfolie angeordnet. Die Reliefstrukturbereiche können dabei unmittelbar übereinander angeordnet sein, oder durch eine Kleberschicht, beispielsweise eine Kaschierkleberschicht oder eine Kaschierfolie voneinander getrennt sein. Die Kaschierfolie kann auch den flächigen Träger des Sicherheitselements bilden. Nach dem Aufbringen des Sicherheitselements auf einen Zieldatenträger kann auch der Träger des Zieldatenträgers den flächigen Träger des Sicherheitselements darstellen.

Die Erfindung enthält weiter einen Datenträger mit einem Sicherheitselement der beschriebenen Art. Bei dem Datenträger kann es sich insbesondere um ein Wertdokument, wie eine Banknote, insbesondere eine Papierbanknote, eine Polymerbanknote oder eine Folienverbundbanknote, um eine Aktie, eine Anleihe, eine Urkunde, einen Gutschein, einen Scheck, eine hochwertige Eintrittskarte, aber auch um eine Ausweiskarte, wie etwa eine Kreditkarte, eine Bankkarte, eine Barzahlungskarte, eine Berechtigungskarte, einen Personalausweis oder eine Passpersonalisierungsseite handeln.

Die Erfindung enthält schließlich auch ein in Anspruch 17 definiertes Verfahren zum Herstellen eines optisch variablen Sicherheitselements.

Der Vollständigkeit halber sei angemerkt, dass der für den Betrachter entstehende Farbeindruck von der Farbbeschichtung bestimmt wird, so dass die vorliegenden Reliefstrukturen auch als unbunte Reliefstrukturen bezeichnet werden könnten. Keine Reliefstrukturen im vorliegenden Sinne sind Buntstrukturen, wie Beugungsgitter, Subwellenlängengitter oder geblazte Gitter, welche weißes Licht wellenlängenselektiv filtern, beugen und/oder reflektieren und für den Betrachter ihren eigenen Farbeindruck erzeugen. In Ausgestaltungen kann der Träger ein Teil des Sicherheitselements sein. In anderen Ausgestaltungen wird das Sicherheitselement vom Träger entfernt, beispielsweise bei einem Übertragen des Sicherheitselements vom Träger auf ein Zielsubstrat.

Weitere Ausführungsbeispiele sowie Vorteile der Erfindung werden nachfolgend anhand der Figuren erläutert, bei deren Darstellung auf eine maßstabs- und proportionsgetreue Wiedergabe verzichtet wurde, um die Anschaulichkeit zu erhöhen.

Es zeigen:

Fig. 1   eine schematische Darstellung einer Banknote mit einem erfindungsgemäßen Sicherheitselement,

Fig. 2   schematisch einen Ausschnitt des Sicherheitselements der Fig. 1 im Querschnitt,

Fig. 3   eine Aufsicht auf einen Ausschnitt des Sicherheitselements der Fig. 1,

Fig. 4   eine Abwandlung der Ausgestaltung der Figuren 2 und 3, bei der die Farbbeschichtung der höher liegenden Mikrospiegelanordnung alternierend streifenförmige Aussparungen und gleich große, streifenförmige stehengelassene Bereiche aufweist,

Fig. 5   in (a) bis (d) einige vorteilhafte Folienaufbauten erfindungsgemäßer Sicherheitselemente,

Fig. 6     ein erfindungsgemäßes Sicherheitselement mit einem zusätzlich Bereich mit einer farblosen Negativkennzeichnung, und

Fig. 7     ein erfindungsgemäßes Sicherheitselement mit einem zusätzlich Bereich mit einer farbigen Negativkennzeichnung.

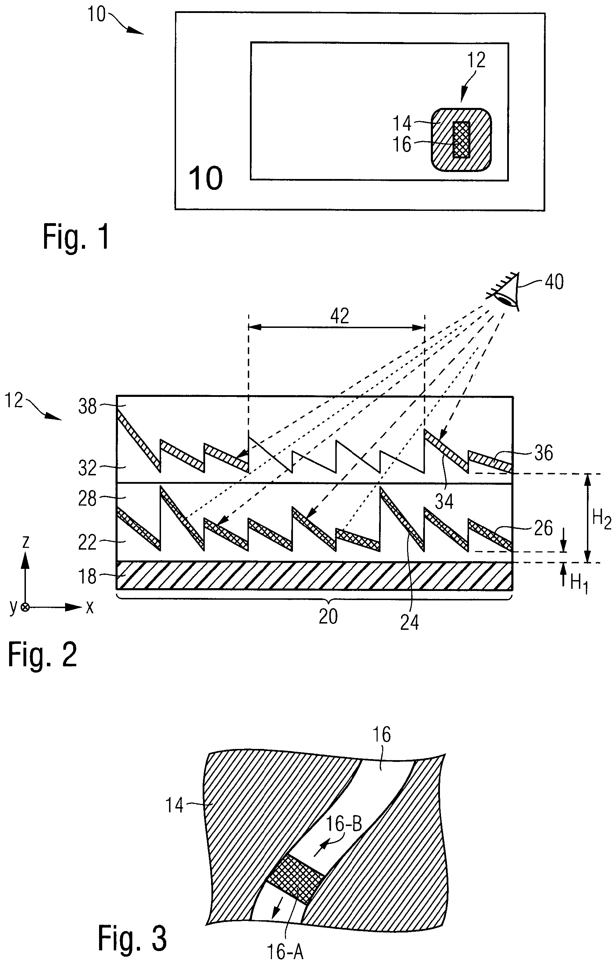

Die Erfindung wird nun am Beispiel von Sicherheitselementen für Banknoten erläutert. Figur 1 zeigt dazu eine schematische Darstellung einer Banknote 10 mit einem erfindungsgemäßen optisch variablen Sicherheitselement 12 in Form eines aufgeklebten Transferelements. Es versteht sich allerdings, dass die Erfindung nicht auf Transferelemente und Banknoten beschränkt ist, sondern bei allen Arten von Sicherheitselementen eingesetzt werden kann, beispielsweise bei Etiketten auf Waren und Verpackungen oder bei der Absicherung von Dokumenten, Ausweisen, Pässen, Kreditkarten, Gesundheitskarten und dergleichen. Bei Banknoten und ähnlichen Dokumenten kommen neben Transferelementen (Patch mit oder ohne eigene Trägerschicht) beispielsweise auch Sicherheitsfäden oder Sicherheitsstreifen in Betracht.

Das in Fig. 1 gezeigte Sicherheitselement 12 ist selbst sehr flach ausgebildet, vermittelt dem Betrachter aber dennoch den dreidimensionalen Eindruck eines sich scheinbar aus der Ebene der Banknote 10 herauswölbenden Motivs 14, das mit einer ersten Farbe, beispielsweise Blau, erscheint. Das Motiv 14 kann beispielsweise eine Wertzahl, ein Portrait oder ein anderes graphisches Motiv darstellen. Innerhalb des blauen Motivs 14 ist in einem Teilbereich 16 ein Bewegungseffekt in einer zweiten Farbe sichtbar, beispielsweise ein Teilbereich 16, in dem sich ein heller roter Balken beim Kippen der Banknote 10 entlang des Teilbereichs auf und ab zu bewegen scheint und einen sogenannten Rolling-Bar-Effekt erzeugt. Als eine wesentliche Besonderheit sind die Bereiche unterschiedlicher Farbe (Rot bzw. Blau) und unterschiedlicher Effekte (dreidimensionales Motiv bzw. laufender Balken) dabei exakt zueinander gepasst. Diese Passerung wird daher nachfolgend auch als Farbe-zu-Effekt-Passerung bezeichnet.

Der besondere Aufbau erfindungsgemäßer optisch variabler Sicherheitselemente wird nun mit Bezug auf die Figuren 2 und 3 näher erläutert, wobei Fig. 2 einen Ausschnitt des Sicherheitselements 12 schematisch im Querschnitt und Fig. 3 zur Illustration des visuellen Erscheinungsbilds eine Aufsicht auf einen Ausschnitt des Sicherheitselements 12 zeigt.

Mit Bezug zunächst auf den Querschnitt der Fig. 2 enthält das Sicherheitselement 12 einen flächigen Träger 18, dessen Flächenausdehnung eine x-y-Ebene und eine darauf senkrecht stehende z-Achse definiert.

Auf dem Träger 18 ist ein mehrfarbiger reflektiver Flächenbereich 20 angeordnet, der zwei Prägestrukturbereiche 24, 34 enthält, die in z-Richtung in zwei bestimmten, unterschiedlichen Höhenstufen bezogen auf den flächigen Träger 20 angeordnet sind. Die Prägestrukturbereiche stellen im Ausführungsbeispiel jeweils Mikrospiegelprägungen bzw. Mikrospiegelanordnungen 24, 34 dar, welche jeweils aus einer Vielzahl von gegen die x-y-Ebene geneigten Mikrospiegeln gebildet sind. Die lokalen Neigungswinkel der Mikrospiegel sind dabei gerade so gewählt, dass die Reliefstruktur der Mikrospiegelanordnungen 24, 34 nach der Farbbeschichtung ein gewünschtes optisches Erscheinungsbild erzeugen, beispielsweise den herausgewölbten dreidimensionalen Eindruck des Motivs 14 oder den Rolling-Bar-Effekt des Teilbereichs 16. Die unterschiedlichen Höhenstufen sind durch die unterschiedlichen Höhen $H_1$, $H_2$ der Grundflächen der Mikrospiegelanordnungen 24, 34 über dem Träger 18 gegeben.

Zur Erzeugung eines visuellen Kontrasts der gewünschten Farbwirkung sind die Mikrospiegelanordnungen 24, 34 jeweils mit einer Farbbeschichtung 26, 36 versehen, die für den Betrachter 40 den unterschiedlichen Farbeindruck der Mikrospiegelanordnungen erzeugen. Im Ausführungsbeispiel ist die untere Mikrospiegelanordnung 24 mit einer roten lasierenden Farbe 26 beschichtet, während die obere Mikrospiegelanordnung 34 mit einer blauen lasierenden Farbe 36 beschichtet ist.

Die Mikrospiegelanordnungen 24, 34 sind jeweils in eine transparente Prägelackschicht 22, 32 eingeprägt und nach dem Aufbringen und gegebenenfalls Strukturieren der jeweiligen Farbbeschichtung 26, 36 mit einer transparenten Decklackschicht 28 bzw. 38 eingeebnet. Die Decklackschichten weisen im Wesentlichen denselben Brechungsindex wie die Prägelackschichten 22, 32 auf, so dass die Mikrospiegel in Bereichen ohne Farbbeschichtung aufgrund des fehlenden Brechungsindexunterschieds zwischen Prägelackschicht und Decklackschicht visuell nicht in Erscheinung treten.

Das Sicherheitselement 12 ist für eine Betrachtung von oben (bzw. in Reflexion) ausgelegt, so dass die weiter vom Betrachter 40 entfernte Mikrospiegelanordnung 24 als die tiefer liegende Mikrospiegelanordnung und die näher am Betrachter 40 liegende Mikrospiegelanordnung 34 als die höher liegende Mikrospiegelanordnung bezeichnet wird.

Die beiden Mikrospiegelanordnungen 24, 34 sind im Ausführungsbeispiel im gesamten Flächenbereich 20 des Sicherheitselements 12 übereinander angeordnet. Im Teilbereich 16 weist die Farbbeschichtung 36 der höher liegenden Mikrospiegelanordnung 34 eine großflächige Aussparung 42, beispielsweise in Form eines 5 mm breiten und 2 cm langen gekrümmten Streifens auf. Im Bereich der Aussparung 42 entfalten die Mikrospiegel der Mikrospiegelanordnung 34 durch den fehlenden Brechungsindexunterschied zwischen den Lackschichten 32, 38 keine optische Wirkung, so dass der Betrachter 40 durch diese Lackschichten hindurch auf die tiefer liegende Mikrospiegelanordnung 24 mit ihrer roten Farbbeschichtung 26 blickt. Außerhalb der Aussparung 42 wird der visuelle Eindruck des Flächenbereichs 20 dagegen von der höher liegenden Mikrospiegelanordnung 34 mit ihrer blauen Farbbeschichtung 36 bestimmt.

Wie in Fig. 3 illustriert, nimmt der Betrachter daher außerhalb der Aussparung 42 das von der Mikrospiegelanordnung 34 erzeugte, blaue Motiv 14 wahr, während innerhalb der Aussparung 42, im Teilbereich 16, der rote Rolling-Bar-Effekt in Erscheinung tritt, bei dem beim Kippen der Banknote 10 ein heller Balken 16-A in Pfeilrichtung 16-B hin- und her zu laufen scheint. Der Höhenunterschied der beiden Mikrospiegelanordnungen 24, 34 liegt im Bereich von einigen Mikrometern oder einigen zehn Mikrometern und ist für den Betrachter 40 daher nicht wahrnehmbar. Die beiden verschiedenfarbigen Motive und die unterschiedlichen Effekte 14,16 scheinen daher für den Betrachter 40 in exaktem Passer nebeneinander angeordnet zu sein. Wie in Fig. 2 für den Betrachter 40 durch die beiden punktierten Linien dargestellt, ist der exakte Passer dabei an beiden Seiten der Aussparung 42 gegeben.

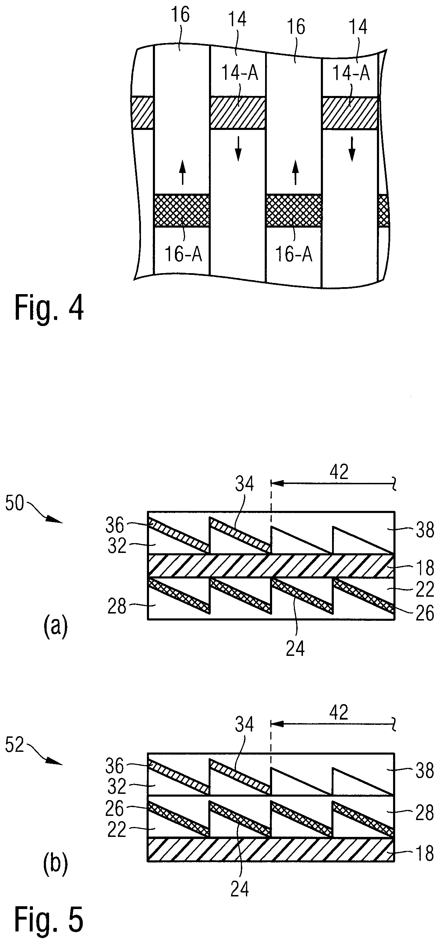

Figur 4 zeigt eine Abwandlung der Ausgestaltung der Figuren 2 und 3, bei der die Farbbeschichtung 36 der höher liegenden Mikrospiegelanordnung 34 alternierend streifenförmige Aussparungen 42 und gleich große, streifenförmige stehengelassene Bereiche aufweist. Im Ausführungsbeispiel der Fig. 4 sind die lokalen Neigungswinkel der Mikrospiegel der Mikrospiegelanordnungen 24, 34 so gewählt, dass die Mikrospiegelanordnungen jeweils einen Rolling-Bar-Effekt mit zueinander entgegengesetzter Laufrichtung erzeugen. Beim Kippen des Sicherheitselements sieht der Betrachter in den Teilbereichen 14, in denen die blaue Farbbeschichtung 36 stehengelassen wurde, einen blauen Rolling-Bar-Effekt und in den Aussparungen der Teilbereichen 16 in exaktem Passer hierzu einen roten Rolling-Bar-Effekt. Die blauen Balken 14-A und die roten Balken 16-A bewegen sich dabei für den Betrachter jeweils in entgegengesetzte Richtung, wie in Fig. 4 illustriert.

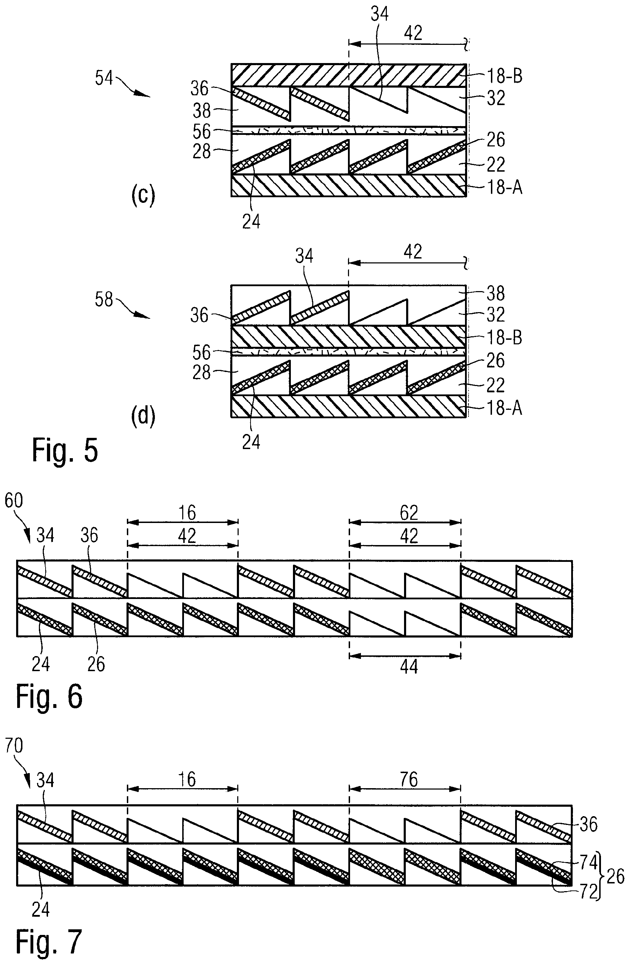

Einige vorteilhafte Folienaufbauten erfindungsgemäßer Sicherheitselemente sind in Fig. 5 dargestellt.

Bei dem Sicherheitselement 50 der Fig. 5(a) ist auf den beiden gegenüberliegenden Seiten einer transparenten PET-Trägerfolie 18 jeweils eine transparente Prägelackschicht 22, 32 mit der gewünschten Mikrospiegelprägung 24, 34, der Farbbeschichtung 26, 36 und der transparenten Decklackschicht 28, 38 angeordnet. Das Sicherheitselement 50 ist für Betrachtung von der Seite der Farbbeschichtung 36 ausgelegt, so dass die Farbbeschichtung 36 der höher liegenden Mikrospiegelanordnung 34 mit großflächigen Aussparungen 42 versehen ist, in denen der Betrachter auf die tiefer liegende Mikrospiegelanordnung 24 mit der Farbbeschichtung 26 blickt.

Das Sicherheitselement 52 der Fig. 5(b) weist den bereits bei Fig. 2 beschriebenen Schichtaufbau auf. Beide Mikrospiegelprägungen 24, 34 sind auf derselben Seite der Trägerfolie 18 angeordnet, die bei dieser Ausgestaltung nicht transparent sein muss. Auf der Trägerfolie sind in dieser Reihenfolge die erste Prägelackschicht 22 mit der ersten, tiefenliegenden Mikrospiegelprägung 24, die erste Farbbeschichtung 26, die erste transparente Deckschicht 28, die zweite, transparente Prägelackschicht 32 mit der zweiten, höher liegenden Mikrospiegelprägung 34, die zweite Farbbeschichtung 36 und die zweite transparente Deckschicht 38 angeordnet. Das Sicherheitselement 52 ist für Betrachtung von der Seite der Farbbeschichtung 36 ausgelegt, so dass die Farbbeschichtung 36 der höher liegenden Mikrospiegelanordnung 34 mit großflächigen Aussparungen 42 versehen ist, in denen der Betrachter auf die tiefer liegende Mikrospiegelanordnung 24 mit der Farbbeschichtung 26 blickt.

Nicht separat figürlich dargestellt sind weitere Varianten von Fig. 5b. Eine transparente Folie kann auch oberhalb der weiteren Schichten 22, 26, 28 und 32, 36, 38 angeordnet sein. Die transparente Folie kann die Trägerfolie 18 des Sicherheitselements sein, eine weitere Trägerfolie sein oder als Schutzfolie dienen. Die Reihenfolge der weiteren Schichten 22, 26, 28 und 32, 36, 38 kann unverändert sein. Alternativ kann die erste Prägelackschicht 22 oberhalb der ersten Deckschicht 28 liegen und/ oder die zweite Prägelackschicht 32 oberhalb der zweiten Deckschicht 38 liegen. Unterhalb der oben angeordneten transparenten Folie 18 folgen somit beispielsweise die weiteren Schichten in der Reihenfolge 32, 36, 38, 22, 26, 28.

Unabhängig von der Lage der Trägerfolie 18 sind ausgehend von Fig. 5b folgende Varianten möglich. Die Farbbeschichtung 26 und die Deckschicht 28 und /oder die Farbbeschichtung 36 und die Deckschicht 38 können durch eine Farbbeschichtung 26 bzw. 36 mit - insbesondere ebener - oberer Oberfläche gebildet sein. Die Farbbeschichtung 26 und/ oder 36 umfasst eine reflektierende Teilschicht (wie Metallisierung), welche mit beiden Oberflächen ihrer Reliefstruktur folgt, sowie eine Teilschicht mit lasierender Farbe, dessen untere Oberfläche der Reliefstruktur folgt, während die obere Oberfläche der lasierenden Farbteilschicht der Reliefstruktur nicht folgt, vorzugsweise eben ausgebildet ist. In einer weiteren Variante bildet eine obere, farbig lasierende Teilschicht der unteren Farbbeschichtung 26 in Fig. 5b die untere Deckschicht 28 und zugleich die obere Prägelackschicht 32. Die Farbbeschichtung 26 umfasst vorzugsweise wiederum eine reflektierende Teilschicht (wie Metallisierung), welche mit beiden Oberflächen ihrer Reliefstruktur folgt. Eine lasierend gefärbte Teilschicht, vorzugsweise eine Prägelackschicht, der Farbbeschichtung 26 folgt mit seiner unteren Oberfläche der unteren Reliefstruktur 24 und mit seiner oberen Oberfläche der oberen Reliefstruktur 34. In einer noch weitergehenden Variante umfasst die untere Farbbeschichtung zumindest (oder genau) drei Teilschichten, eine reflektierende Teilschicht, eine ausgleichende Teilschicht und eine Teilschicht mit lasierender Farbe, vorzugsweise gefärbter Prägelack. Die reflektierende Teilschicht folgt mit einer (bzw. beiden) Oberfläche(n) der zweiten, unteren Reliefstruktur 24 und die farbig lasierende Teilschicht folgt mit ihrer Oberseite der ersten, oberen Reliefstruktur 34.

In anderen Gestaltungen können bei der Herstellung des Sicherheitselements auch zwei Folien 18-A, 18-B eingesetzt werden, die jeweils separat mit einer der Mikrospiegelstrukturen 22-28 bzw. 32-38 versehen und dann geeignet zusammenkaschiert werden.

Beim dem Sicherheitselement 54 der Fig. 5(c) werden die beiden Trägerfolien 18-A, 18-B so zusammenkaschiert, dass die Mikrospiegelstrukturen 22-28 bzw. 32-38 innen liegen. Die Kaschierung 56 kann eine Kaschierfolie umfassen oder auch nur durch einen Kaschierkleber gebildet sein. Bei dieser Gestaltung kann eine oder beide der Trägerfolien 18-A, 18-B nach dem Kaschieren abgezogen werden, um das Sicherheitselement 54 möglichst dünn auszubilden. Insbesondere bei Verwendung einer Kaschierfolie können sogar beide Trägerfolien 18-A, 18-B abgezogen werden, da die Stabilität des Sicherheitselements 54 durch die Kaschierfolie, die dann als flächiger Träger des Sicherheitselements wirkt, gewährleistet ist. Auch das Sicherheitselement 54 ist für Betrachtung von der Seite der Farbbeschichtung 36 ausgelegt, so dass die Farbbeschichtung 36 der höher liegenden Mikrospiegelanordnung 34 mit großflächigen Aussparungen 42 versehen ist, in denen der Betrachter auf die tiefer liegende Mikrospiegelanordnung 24 mit der Farbbeschichtung 26 blickt.

Beim Sicherheitselement 58 der Fig. 5(d) sind die Trägerfolien 18-A, 18-B so zusammenkaschiert, dass eine Mikrospiegelstruktur 22-28 innen und die andere Mikrospiegelstruktur 32-38 außen liegt. Die Kaschierung 56 kann eine Kaschierfolie umfassen oder nur durch einen Kaschierkleber gebildet sein. Die außen liegende Trägerfolie 18-A kann nach dem Kaschieren abgezogen werden, um das Sicherheitselement 58 möglichst dünn auszubilden. Die großflächigen Aussparungen 42 sind auch hier in der Farbbeschichtung 36 der höher liegenden Mikrospiegelanordnung 34 vorgesehen, um dem Betrachter den Blick auf die tiefer liegende Mikrospiegelanordnung 24 mit der Farbbeschichtung 26 zu ermöglichen.

Eine weitere, in den Figuren nicht gezeigte Variante besteht schließlich darin, die Trägerfolien so zusammen zu kaschieren, dass beide Mikrospiegelstrukturen 22-28 bzw. 32-38, 42 außen liegen.

Wie weiter oben bereits genauer erläutert, können die Farbbeschichtungen 26, 36 nicht nur durch lasierende Farben, sondern beispielsweise auch durch Metallisierungen, durch Dünnfilmaufbauten, durch mit einer Metallisierung hinterlegte lasierende Farben, durch Lumineszenzfarben mit metallischer Verspiegelung, durch Strukturfarben oder durch Nanopartikelfarben gebildet sein.

Wie ebenfalls bereits dargelegt, ist die Trägerfolie 18 ein optionales Element. Sie kann also in jeder der gezeigten, genannten oder folgenden Varianten entfallen. Beispielsweise kann die Trägerfolie 18 in Fig. 5(b), die Trägerfolie(n) 18-A/B in Fig. 5(c) oder die Trägerfolie 18-A in Fig. 5d vor (bzw. nach) einem Aufbringen des Sicherheitselementes auf ein Zielsubstrat entfernt werden. Eine nicht dargestellte Ablöseschicht, die zwischen der Trägerfolie und den weiteren Schichten liegt, wird in solchen Ausgestaltungen vorgesehen.

Die erfindungsgemäßen Sicherheitselemente können zusätzlich auch Bereiche mit Negativkennzeichnungen, beispielsweise einer Negativschrift enthalten, wie anhand der Figuren 6 und 7 illustriert. Zur Vereinfachung sind in diesen Figuren nur die Mikrospiegelstrukturen 22-28 und 32-38 ohne Trägerfolien oder weitere Schichten des Schichtaufbaus dargestellt.

Das Sicherheitselement 60 der Fig. 6 ist dabei grundsätzlich wie das Sicherheitselement 12 der Fig. 2 aufgebaut, insbesondere enthält die Farbbeschichtung 36 der höher liegenden Mikrospiegelanordnung 34 in Teilbereichen 16 Aussparungen 42, die über beschichteten Bereichen 26 der tiefer liegenden Mikrospiegelanordnung 24 angeordnet sind und die oben beschriebene Farbe-zu-Effekt-Passerung erzeugen. Zusätzlich enthält das Sicherheitselement 60 auch Teilbereiche 62, in denen die Farbbeschichtungen 26, 36 beider Mikrospiegelanordnungen 24, 34 ausgespart (Aussparungen 44 bzw. 42) sind, so dass das Sicherheitselement 60 in diesen Bereichen keinen der Farbeindrücke der beiden Farbbeschichtungen zeigt.

Die Form der Teilbereiche 62 bildet ein Negativkennzeichen, insbesondere eine Negativschrift, welche bei einer zumindest transluzenten Ausgestaltung der weiteren Schichten des Sicherheitselements besonders gut im Durchlicht erkennbar ist. In den Teilbereichen 62 sind die Aussparungen 44 der Farbbeschichtung 26 der tiefer liegenden Mikrospiegelanordnung 24 mit einer etwas größeren Fläche ausgebildet als die zugehörigen Aussparungen 42 in der Farbbeschichtung 36, um Registerschwankungen zwischen den beiden Prägestrukturen 24, 34 aufzufangen. Die Linienstärken der übereinander liegenden Aussparungen 42, 44 sind größer als 100 $\mu$m, insbesondere größer als 300 $\mu$m, um eine gute Erkennbarkeit der Negativkennzeichen zu gewährleisten.

Auch farbige Negativkennzeichen können vorgesehen sein, wie anhand des Sicherheitselements 70 der Fig. 7 illustriert. Bei diesem Ausführungsbeispiel besteht die Farbbeschichtung 26 der tiefer liegenden Mikrospiegelanordnung 24 aus einer mit einer Metallisierung 72 hinterlegten lasierenden Farbe 74. In den Teilbereichen 16 liegen die Aussparungen 42 der Farbbeschichtung 36 wie bei Fig. 6 über vollständig beschichteten Bereichen 26 der tiefer liegenden Mikrospiegelanordnung 24, so dass sich in diesen Teilbereichen die bereits beschriebene Farbe-zu-Effekt-Passerung ergibt.

Zusätzlich enthält das Sicherheitselement 70 Teilbereiche 76, in denen neben der Farbbeschichtung 36 der höher liegenden Mikrospiegelanordnung 34 auch die Metallisierung 72 der Farbbeschichtung 26 der tiefer liegenden Mikrospiegelanordnung 24 ausgespart ist, die lasierende Farbe 74 aber erhalten ist. Während das Sicherheitselement 70 in den Teilbereichen 16 durch die Metallisierung 72 farbig und opak erscheint, sind die Teilbereiche 76 aufgrund der dort fehlenden Metallisierung 72 farbig und transluzent. Die Form der Teilbereiche 76 bildet somit ein farbiges Negativkennzeichen, insbesondere eine farbige Negativschrift, welche bei einer zumindest transluzenten Ausgestaltung der weiteren Schichten des Sicherheitselements besonders gut im Durchlicht erkennbar ist. Auch bei dem Ausführungsbeispiel der Fig. 7 sind die Aussparungen in der Metallisierung 72 vorteilhaft mit einer etwas größeren Fläche ausgebildet als die Aussparungen 42 in der Farbbeschichtung 36, um Registerschwankungen aufzufangen. Auch sind die Linienstärken der übereinanderliegenden Aussparungen vorzugsweise größer als 100 μm, insbesondere größer als 300 μm, um eine gute Erkennbarkeit der farbigen Negativkennzeichen zu gewährleisten.

Bezugszeichenliste

| | |
|---|---|
| 10 | Banknote |
| 12 | Sicherheitselement |
| 14 | herauswölbendes Motiv |
| 16 | Teilbereich |
| 16-A | heller Balken |
| 16-B | Bewegungsrichtung |
| 18 | Träger |
| 18-A, 18-B | Trägerfolien |
| 20 | reflektiver Flächenbereich |
| 22 | Prägelackschicht |
| 24 | Mikrospiegelanordnung |
| 26 | Farbbeschichtung |
| 28 | Decklackschicht |
| 32 | Prägelackschicht |
| 34 | Mikrospiegelanordnung |
| 36 | Farbbeschichtung |
| 38 | Decklackschicht |
| 40 | Betrachter |
| 42 | großflächige Aussparung |
| 44 | Aussparungen |
| 50, 52, 54 | Sicherheitselement |
| 56 | Kaschierung |
| 58 | Sicherheitselement |
| 60 | Sicherheitselement |
| 62 | Teilbereich mit Negativkennzeichen |
| 70 | Sicherheitselement |
| 72 | Metallisierung |
| 74 | lasierende Farbschicht |

**Patentansprüche**

1. Optisch variables Sicherheitselement (12), dessen Flächenausdehnung eine darauf senkrecht stehende z-Achse definiert, mit einem mehrfarbigen, reflektiven Flächenbereich (20), wobei

- der reflektive Flächenbereich (20) eine erste, höher liegende Reliefstruktur (34) und eine zweite, tiefer liegende Reliefstruktur (24) enthält, die in z-Richtung in unterschiedlichen Höhenstufen angeordnet sind,
- die erste Reliefstruktur (34) mit einer ersten Farbbeschichtung (36) und die zweite Reliefstruktur (24) mit einer zweiten, unterschiedlichen Farbbeschichtung (26) versehen sind,
- die beiden Reliefstrukturen (24, 34) in einem Überlappungsbereich überlappen,
  **dadurch gekennzeichnet, dass**
- die erste Farbbeschichtung (36) der höher liegenden ersten Reliefstruktur (34) im Überlappungsbereich zumindest eine Aussparung (42) aufweist, deren Abmessung mehr als 140 μm beträgt, wobei die erste Farbbeschichtung (36) angrenzend an die Aussparung einen Randbereich umfasst, und
- als zweifarbiges Passermerkmal die erste Reliefstruktur (34) den Randbereich der erste Farbbeschichtung (36) mit einem ersten Farbeindruck und die zweite Reliefstruktur (24) die zweite Farbbeschichtung (36) durch die Aussparung (42) hindurch mit einem zweiten, unterschiedlichen Farbeindruck zueinander gepasst in Erscheinung treten lassen.

2. Sicherheitselement nach Anspruch 1, **dadurch gekennzeichnet, dass** die Abmessungen der Aussparung mehr als 250 μm, insbesondere mehr als 500 μm und bevorzugt mehr als 1 mm betragen.

3. Sicherheitselement nach Anspruch 1 oder 2, **dadurch gekennzeichnet, dass** der reflektive Flächenbereich genau zwei Reliefstrukturen enthält, die jeweils auf einer bestimmten Höhenstufe angeordnet sind.

4. Sicherheitselement nach wenigstens einem der Ansprüche 1 bis 3, **dadurch gekennzeichnet, dass** für einen Betrachter in einem Betrachtungswinkelbereich oder in einem zweiten Betrachtungswinkel die Farbbeschichtungen zueinander gepasst in Erscheinung treten.

5. Sicherheitselement nach wenigstens einem der Ansprüche 1 bis 4, **dadurch gekennzeichnet, dass** für einen Betrachter in einem zweiten Betrachtungswinkelbereich oder in einem dritten Betrachtungswinkel zumindest eine der beiden Reliefstrukturen (24, 34) nicht farblich in Erscheinung tritt.

6. Sicherheitselement nach wenigstens einem der Ansprüche 1 bis 5, **dadurch gekennzeichnet, dass** die zweite Farbbeschichtung in einem durch die Aussparung (42) und einen Betrachtungswinkel definierten Betrachtungsbereich vollflächig oder teilweise, nämlich nur angrenzend an den Randbereich, in Erscheinung tritt.

7. Sicherheitselement nach wenigstens einem der Ansprüche 1 bis 6, **dadurch gekennzeichnet, dass** das zweifarbige Passermerkmal ein eigenständiges, optisch variables Merkmal bildet oder in ein optisch variables Merkmal des reflektiven Flächenbereiches integriert ist.

8. Sicherheitselement nach wenigstens einem der Ansprüche 1 bis 7, **dadurch gekennzeichnet, dass** der reflektive Flächenbereich zwei, drei oder mehr als drei entsprechende Aussparungen umfasst, die insbesondere aufeinander abgestimmt sind, um ein optisch variables Merkmal des reflektiven Flächenbereiches zu bilden.

9. Sicherheitselement nach wenigstens einem der Ansprüche 1 bis 8, **dadurch gekennzeichnet, dass** die Reliefstrukturen jeweils durch eine maximale Ganghöhe charakterisiert sind und der Abstand benachbarter Höhenstufen in z-Richtung größer als die maximale Ganghöhe der tiefer liegenden zweiten Reliefstruktur ist, bevorzugt zwischen 150% und 750%, besonders bevorzugt zwischen 200% und 500% der maximalen Ganghöhe der tiefer liegenden, zweiten Reliefstruktur liegt.

10. Sicherheitselement nach wenigstens einem der Ansprüche 1 bis 9, **dadurch gekennzeichnet, dass** die Farbbeschichtungen durch lasierende Farben, durch Metallisierungen, Dünnschichtaufbauten, durch mit einer Metallisierung hinterlegte lasierende Farben, durch Lumineszenzfarben mit einer metallischen Verspiegelung, durch Strukturfarben und/oder durch Nanopartikelfarben gebildet sind.

11. Sicherheitselement nach wenigstens einem der Ansprüche 1 bis 10, **dadurch gekennzeichnet, dass** im Überlappungsbereich zusätzlich zumindest ein Teilbereich mit einer Negativkennzeichnung vorgesehen ist, in dem die Farbbeschichtung der höher liegenden, ersten Reliefstruktur und zumindest teilweise auch die Farbbeschichtung der tiefer liegenden, zweiten Reliefstruktur ausgespart ist.

12. Sicherheitselement nach Anspruch 11, **dadurch gekennzeichnet, dass** die Farbbeschichtung der zweiten Reliefstruktur in dem Negativkennzeichnungs-Teilbereich vollständig ausgespart ist, so dass das Negativkennzeichen keinen der Farbeindrücke der beiden Farbbeschichtungen erzeugt.

13. Sicherheitselement nach Anspruch 11, **dadurch gekennzeichnet, dass** die Farbbeschichtung der zweiten Reliefstruktur mehrschichtig ausgebildet ist, und in dem Negativkennzeichnungs-Teilbereich zumindest eine der mehreren Schichten ausgespart ist, so dass ein farbiges Negativkennzeichen entsteht.

14. Sicherheitselement nach Anspruch 13, **dadurch gekennzeichnet, dass** die Farbbeschichtung der zweiten Reliefstruktur eine opake Teilschicht, insbesondere eine Metallisierung, und eine transluzente Farbschicht aufweist, und in den Negativkennzeichnungs-Teilbereichen die opake Teilschicht, nicht aber die transluzente Farbschicht ausgespart ist, so dass ein Negativkennzeichen mit dem Farbeindruck der transluzenten Farbschicht entsteht.

15. Sicherheitselement nach wenigstens einem der Ansprüche 1 bis 14, **dadurch gekennzeichnet, dass** die erste und/ oder die zweite Reliefstruktur eine Mikrospiegelanordnung mit gerichteten Mikrospiegeln ist.

16. Datenträger mit einem optisch variablen Sicherheitselement nach wenigstens einem der Ansprüche 1 bis 15.

17. Verfahren zum Herstellen eines optisch variablen Sicherheitselements nach wenigstens einem der Ansprüche 1 bis 15, bei dem

- ein Träger bereitgestellt wird, dessen Flächenausdehnung eine x-y-Ebene und eine darauf senkrecht stehende z-Achse definiert,
- der Träger mit einem mehrfarbigen reflektiven Flächenbereich versehen wird, der mit zumindest zwei Reliefstrukturen ausgebildet wird, die in z-Richtung in unterschiedlichen Höhenstufen bezogen auf den flächigen Träger angeordnet werden und überlappend angeordnet werden,
- die beiden Reliefstrukturen mit unterschiedlichen Farbbeschichtungen versehen werden, **dadurch gekennzeichnet, dass**
- die Farbbeschichtung der höher liegenden Reliefstruktur im Überlappungsbereich mit einer Aussparung ausgebildet wird, deren Abmessungen mehr als 140 $\mu$m beträgt, wobei die Farbbeschichtung (36) der höher liegenden Reliefstruktur angrenzend an die Aussparung einen Randbereich umfasst, und
- als zweifarbiges Passermerkmal die erste Reliefstruktur (34) so ausgebildet wird, dass der Randbereich der ersten Farbbeschichtung (36) mit einem ersten Farbeindruck und die zweite Reliefstruktur (24) so ausgebildet wird, dass die zweite Farbbeschichtung (36) durch die Aussparung (42) hindurch mit einem zweiten, unterschiedlichen Farbeindruck zueinander gepasst in Erscheinung treten.

## Claims

1. An optically variable security element (12), the surface expansion of which defines a z axis standing perpendicularly thereon, with a multicolored, reflective areal region (20), wherein

   - the reflective areal region (20) includes a first relief structure disposed at a higher level (34) and a second relief structure disposed at a lower level (24), which are arranged at different height levels in the z direction,
   - the first relief structure (34) is supplied with a first ink coating (36) and the second relief structure (24) is supplied with a second, different ink coating (26),
   - the two relief structures (24, 34) overlap in an overlap region,
   **characterized in that**
   - the first ink coating (36) of the first relief structure disposed at a higher level (34) in the overlap region has at least one recess (42), the dimension of which is more than 140 $\mu$m, wherein the first ink coating (36) comprises an edge region adjoining the recess, and
   - as a bicolor register feature the first relief structure (34) lets the edge region of the first ink coating (36) appear with a first color impression and the second relief structure (24) through the recess (42) lets the second ink coating (36) appear with a second, different color impression in mutual register.

2. The security element according to claim 1, **characterized in that** the dimensions of the recess are more than 250 $\mu$m, in particular more than 500 $\mu$m and preferably more than 1 mm.

3. The security element according to claim 1 or 2, **characterized in that** the reflective areal region includes exactly two relief structures, each of which is arranged at a specific height level.

4. The security element according to at least one of claims 1 to 3, **characterized in that** in a viewing angle range or at a second viewing angle the ink coatings appear in mutual register for a viewer.

5. The security element according to at least one of claims 1 to 4, **characterized in that** in a second viewing angle range or at a third viewing angle at least one of the two relief structures (24, 34) does not appear chromatically for a viewer.

6. The security element according to at least one of claims 1 to 5, **characterized in that** the second ink coating appears over the full area or partially, namely only adjoining the edge region in a viewing range defined by the recess (42) and a viewing angle.

7. The security element according to at least one of claims 1 to 6, **characterized in that** the bicolor register feature forms an independent, optically variable feature or is integrated in an optically variable feature of the reflective areal region.

8. The security element according to at least one of claims 1 to 7, **characterized in that** the reflective areal region comprises two, three or more than three corresponding recesses, which are in particular matched to one another in order to form an optically variable feature of the reflective areal region.

9. The security element according to at least one of claims 1 to 8, **characterized in that** the relief structures are each **characterized by** a maximum pitch and the distance between adjacent height levels in the z direction is greater than the maximum pitch of the second relief structure disposed at a lower level, preferably between 150% and 750%, particularly preferably between 200% and 500% of the maximum pitch of the second relief structure disposed at a lower level.

10. The security element according to at least one of claims 1 to 9, **characterized in that** the ink coatings are formed by glazing inks, by metalizations, thin-film structures, by glazing inks backed with a metalization, by luminescent inks with a metallic mirroring, by structural inks and/or by nanoparticle inks.

11. The security element according to at least one of claims 1 to 10, **characterized in that** in the overlap region there is additionally provided at least one partial region with a negative marking, in which the ink coating of the first relief structure disposed at a higher level and at least partially also the ink coating of the second relief structure disposed at a lower level are recessed.

12. The security element according to claim 11, **characterized in that** the ink coating of the second relief structure is completely recessed in the negative marking partial region, so that the negative marking does not produce any of the color impressions of the two ink coatings.

13. The security element according to claim 11, **characterized in that** the ink coating of the second relief structure is configured to be multilayered and in the negative marking partial region at least one of the several layers is recessed so that a colored negative marking is created.

14. The security element according to claim 13, **characterized in that** the ink coating of the second relief structure has an opaque partial layer, in particular a metallization, and a translucent ink layer, and the opaque partial layer, but not the translucent ink layer, is recessed in the negative marking partial regions, so that a negative marking with the color effect of the translucent ink layer is created.

15. The security element according to at least one of claims 1 to 14, **characterized in that** the first and/or the second relief structure is a micromirror arrangement with directional micromirrors.

16. A data carrier with an optically variable security element according to at least one of claims 1 to 15.

17. A method for manufacturing an optically variable security element, according to any of claims 1 to 15, in which

> - a carrier is made available, the areal expansion of which defines an x-y plane and a z axis standing perpendicularly thereon,
> - the carrier is supplied with a multicolored, reflective areal region which is formed with at least two relief structures which are arranged at different height levels in the z direction with reference to the areal carrier and are arranged in overlapping manner,
> - the two relief structures are supplied with different ink coatings, **characterized in that**
> - the ink coating of the relief structure disposed at a higher level in the overlap region is configured with a recess the dimensions of which are more than 140 $\mu$m, wherein the ink coating (36) of the relief structure disposed at a higher level comprises an edge region adjoining the recess, and
> - as a bicolor register feature the first relief structure (34) is configured so that the edge region of the first ink coating (36) is configured with a first color impression and the second relief structure (24) is configured such that the second ink coating (36) appears through the recess (42) with a second, different color impression in mutual register.

**Revendications**

1. Elément de sécurité optiquement variable (12) dont l'étendue de surface définit un axe Z étant perpendiculaire à lui, ayant une zone de surface (20) multicolore réflective, cependant que

> - la zone de surface (20) réflective comprend une première structure en relief (34), plus élevée, et une deuxième structure en relief (24), moins élevée, qui, en direction Z, sont agencées à différents niveaux de hauteur,
- la première structure en relief (34) est pourvue d'un premier revêtement de couleur (36) et la deuxième structure en relief (24) est pourvue d'un deuxième revêtement de couleur (26), différent,
- les deux structures en relief (24, 34) se chevauchent dans une zone de chevauchement, **caractérisé en ce que**
- le premier revêtement de couleur (36) de la première structure en relief (34), plus élevée, comporte dans la zone de chevauchement au moins un dégagement (42) dont la dimension est supérieure à 140 $\mu$m, cependant que le premier revêtement de couleur (36) comprend, de manière adjacente au dégagement, une zone de bordure, et
- en tant que caractéristique bicolore de repérage, la première structure en relief (34) confère à la zone de bordure du premier revêtement de couleur (36) un premier aspect de couleur, et la deuxième structure en relief (24) confère au deuxième revêtement de couleur (36), à travers le dégagement (42), un deuxième et différent aspect de couleur, ces aspects apparaissant en repérage l'un avec l'autre.

2. Elément de sécurité selon la revendication 1, **caractérisé en ce que** les dimensions du dégagement sont supérieures à 250 $\mu$m, en particulier supérieures à 500 $\mu$m et de préférence supérieures à 1 mm.

3. Elément de sécurité selon la revendication 1 ou 2, **caractérisé en ce que** la zone de surface (20) réflective comporte exactement deux structures en relief respectivement agencées sur un niveau de hauteur déterminé.

4. Elément de sécurité selon au moins une des revendications de 1 à 3, **caractérisé en ce que**, pour un observateur, dans une zone d'angle d'observation ou dans une deuxième zone d'angle d'observation, les revêtements de couleur apparaissent en repérage l'un avec l'autre.

5. Elément de sécurité selon au moins une des revendications de 1 à 4, **caractérisé en ce que**, pour un observateur, dans une deuxième zone d'angle d'observation ou dans une troisième zone d'angle d'observation, au moins une des deux structures en relief (24, 34) n'apparaît pas en couleur.

6. Elément de sécurité selon au moins une des revendications de 1 à 5, **caractérisé en ce que** le deuxième revêtement de couleur (26), dans une zone d'observation définie par le dégagement (42) et un angle d'observation, apparaît à pleine surface ou partiellement, à savoir seulement de manière adjacente à la zone de bordure.

7. Elément de sécurité selon au moins une des revendications de 1 à 6, **caractérisé en ce que** la caractéristique bicolore de repérage constitue une caractéristique optiquement variable indépendante ou est intégrée dans la caractéristique optiquement variable de la zone de surface réflective.

8. Elément de sécurité selon au moins une des revendications de 1 à 7, **caractérisé en ce que** la zone de surface réflective comprend deux, trois ou plus de trois dégagements correspondants qui sont en particulier accordés entre eux afin de constituer une caractéristique optiquement variable de la zone de surface réflective.

9. Elément de sécurité selon au moins une des revendications de 1 à 8, **caractérisé en ce que** les structures en relief sont respectivement **caractérisées par** un pas maximal, et l'écart entre des des niveaux de hauteur voisins dans la direction Z est supérieur au pas maximal de la deuxième structure en relief, moins élevée, et est de préférence compris entre 150 % et 750 %, particulièrement de préférence entre 200 % et 500 % du pas maximal de la deuxième structure en relief, moins élevée.

10. Elément de sécurité selon au moins une des revendications de 1 à 9, **caractérisé en ce que** les revêtements de couleur sont constitués par des encres à effet lasurant, par des métallisations, par des dispositions en couche mince, par des encres à effet lasurant chemisées d'une métallisation, par des encres luminescentes à réfléchissement métallique, par des encres structurales et/ou par des encres à nanoparticules.

11. Elément de sécurité selon au moins une des revendications de 1 à 10, **caractérisé en ce que**, dans la zone de chevauchement, en outre au moins une zone partielle ayant une marque négative est prévue, dans laquelle le revêtement de couleur de la première structure en relief, plus élevée, et au moins partiellement le revêtement de couleur de la deuxième structure en relief, moins élevée, est dégagé.

12. Elément de sécurité selon la revendication 11, **caractérisé en ce que** le revêtement de couleur de la deuxième structure en relief est entièrement dégagé dans la zone partielle à marque négative, de telle sorte que la marque négative ne génère aucun des aspects de couleur des deux revêtements.

13. Elément de sécurité selon la revendication 11, **caractérisé en ce que** le revêtement de couleur de la deuxième structure en relief est réalisé sous forme multicouche, et, dans la zone partielle à marque négative, au moins une des plusieurs couches est dégagée, de telle sorte qu'une marque négative est engendrée.

14. Elément de sécurité selon la revendication 13, **caractérisé en ce que** le revêtement de couleur de la deuxième structure en relief comporte une couche partielle opaque, en particulier une métallisation, et une couche d'encre translucide, et, dans les zones partielles à marque négative, la couche partielle opaque est dégagée, mais pas la couche d'encre translucide, de telle sorte qu'une marque négative ayant l'aspect de couleur de la couche d'encre translucide est engendrée.

15. Elément de sécurité selon au moins une des revendications de 1 à 14, **caractérisé en ce que** la première et/ou la deuxième structure en relief est un agencement de micro-miroirs à micro-miroirs orientés.

16. Support de données ayant un élément de sécurité optiquement variable selon au moins une des revendications de 1 à 15.

17. Procédé de fabrication d'un élément de sécurité optiquement variable selon au moins une des revendications de 1 à 15, dans lequel

- un support est mis à disposition, dont l'étendue de surface définit un plan X-Y et un axe Z étant perpendiculaire à lui,
- le support est pourvu d'une zone de surface multicolore réflective qui est réalisée avec au moins deux structures en relief qui, en direction Z, sont agencées à différents niveaux de hauteur relativement au support plan, et sont agencées de manière se chevauchant,
- les deux structures en relief sont pourvues de différents revêtements de couleur, **caractérisé en ce que**
- le revêtement de couleur de la structure en relief plus élevée est, dans la zone de chevauchement, réalisée avec un dégagement dont les dimensions sont supérieures à 140 $\mu$m, cependant que le revêtement de couleur de couleur (36) de la structure en relief plus élevée comprend, de manière adjacente au dégagement, une zone de bordure, et
- en tant que caractéristique bicolore de repérage, la première structure en relief (34) est réalisée de telle façon que la zone de bordure du premier revêtement de couleur (36) a un premier aspect de couleur, et la deuxième structure en relief (24) est réalisée de telle façon que le deuxième revêtement de couleur (36), à travers le dégagement (42), a un deuxième et différent aspect de couleur, ces aspects apparaissant en repérage l'un avec l'autre.

Fig. 1

Fig. 2

Fig. 3

Fig. 4

(a)

(b)

Fig. 5

(c)

Fig. 5

(d)

Fig. 6

Fig. 7

**IN DER BESCHREIBUNG AUFGEFÜHRTE DOKUMENTE**

**In der Beschreibung aufgeführte Patentdokumente**

- WO 2012000669 A1
- US 2008231976 A1
- WO 2007079851 A1
- EP 3216620 A1